# EUROPEAN PATENT SPECIFICATION

(11) **EP 3 544 859 B1**
(45) Date of publication and mention of the grant of the patent: **28.04.2021**
(21) Application number: 17874906.5
(22) Date of filing: 27.11.2017
(51) Int. Cl.: B60R 13/04, B60R 19/52

(54) **AN ASSEMBLY STRUCTURE**
MONTAGESTRUKTUR
STRUCTURE D'ASSEMBLAGE

(30) Priority: 28.11.2016 CN 201611064325
(43) Date of publication of application: 02.10.2019
(73) Proprietor: Yanfeng Plastic Omnium Automotive Exterior Systems Co., Ltd., Shanghai 201805 (CN); Compagnie Plastic Omnium, 69007 Lyon (FR)
(72) Inventor: GUI, Xiaogang, Shanghai 201805 (CN); ZHANG, Zhiyao, Shanghai 201805 (CN)
(74) Representative: LLR
(86) International application number: PCT/CN2017/113076
(87) International publication number: WO 2018/095427

(56) References cited:
- WO-A1-2014/079818
- WO-A1-2018/077161
- CN-A- 103 171 506
- CN-A- 103 818 325
- CN-A- 105 774 725
- CN-A- 106 740 548
- CN-U- 205 524 036
- CN-U- 206 217 794
- US-A1- 2007 176 441
- US-A1- 2011 204 680

## Description

### Field of Invention

The present invention relates to the field of exterior decoration for vehicles, and more particularly to an assembly structure.

### Background

With the deepening of China's reform, China and foreign countries enhance their cooperation in the vehicle industry and develop more projects on the globe simultaneously. In order to occupy a larger market share in China, some well-known automobile enterprises introduce the world most fashionable styles into China, such as a light band having the effect of "Motion of Soul" added between a grille and a bumper, which also provides Chinese enterprises with opportunities to enter into overseas market.

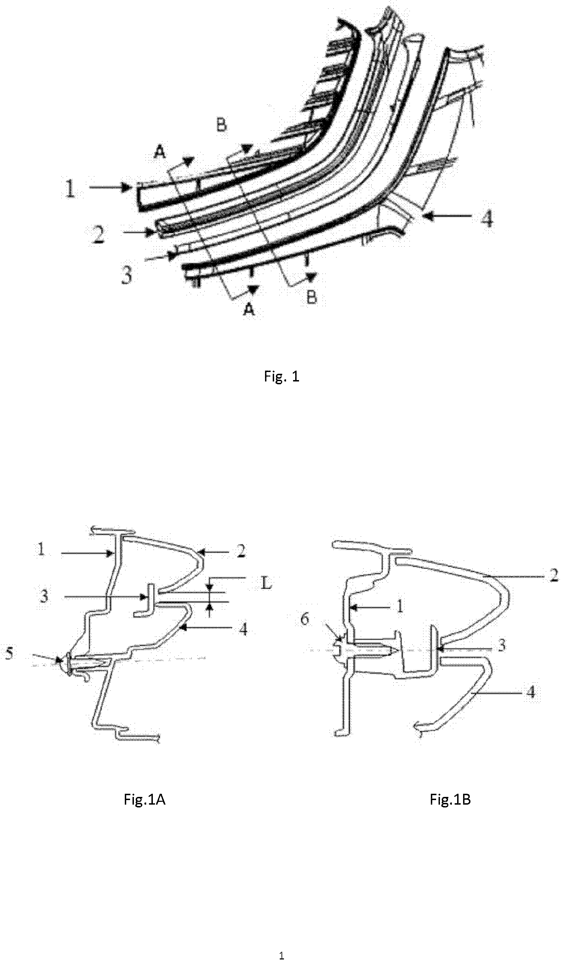

Current technical solutions used in foreign countries are shown in Figs. 1, 1A and 1B, wherein a grille 1 and a bumper 4 are connected by a screw 5, the grille 1 and a decorative piece 3 are also connected by a screw 6, and there is no connection between a plated trim 2 and the decorative piece 3, or between the bumper 4 and the decorative piece 3.

Thus, the prior-art technical solution has the following drawbacks: a. since there is no connecting structure between the plated trim and the decorative piece or between the bumper and the decorative piece, the gap L between the plated trim and the decorative piece, as well as between the bumper and the decorative piece, cannot be controlled; b. since the bumper and the grille are connected by the screw, a protrusive rod have to be arranged on the bumper, which leaves a shrink mark on the surface of the bumper; and c. since the bumper and the grille, as well as the decorative piece and the grille, are respectively connected by the screw, it would increase the cost.

Moreover, in the prior art, generally speaking, a headlight is first assembled onto a vehicle body, and then the grille 1, the plated trim 2, the decorative piece 3 and the bumper 4 are assembled as a front bumper assembly onto the vehicle body. However, it is very hard to control the uniformity of the gap between the front bumper assembly and left and right headlights in Y direction Document WO2014079818 discloses an assembly structure according to the preamble of claim 1.

### Summary

The object of the present invention is to provide an assembly structure so as to solve the problems in the prior art, such as uncontrollable gap between the plated trim and the bumper of the assembly structure, increased cost, and uncontrollable uniformity of the gap between the front bumper assembly and left and right headlights in Y direction.

To solve the above technical problems, the present invention adopts the following technical solutions:
According to the present invention, there is provided an assembly structure defined by the features of claim 1. As a result, the plated trim, the decorative piece and the bumper are relatively fixed to each other so that the gap between the plated trim and the bumper, i.e. the exposed width of the decorative piece is controllable.

The decorative piece has an M-shaped self-adaptive structure which comprises a recess and two protrusions separated by the recess, according to the invention.

The recess of the decorative piece has a plane structure.

The recess of the decorative piece is partially exposed to the exterior between the plated trim and the bumper.

The visible width of the exposed part of the recess of the decorative piece which is exposed between the plated trim and the bumper ranges from 4.0mm to 5.0mm, most preferably 4.5mm. Alternatively, the decorative piece is a coloured piece, which is a light plate piece mainly for enhancing the colour gradation in that area. Of course, it shall be understood that the decorative piece is not limited to a coloured piece, and may be a part made of other material.

Preferably, the grille having a first, a second, a third and a fourth snap-fit hole; the plated trim having a first snap and being fixedly connected to the grille by mating the first snap with the first snap-fit hole; the decorative piece having a second snap and a third snap, the decorative piece being fixedly connected to the grille by mating the second snap with the second snap-fit hole and mating the third snap with the third snap-fit hole; and the bumper having a fourth snap which passes through the decorative piece to be fixedly connected to the grille by mating the fourth snap with the fourth snap-fit hole.

The second snap and the third snap are respectively located at the free ends of the protrusions of the decorative piece.

The plated trim also has a fifth snap and the grille has a fifth snap-fit hole. The plated trim passes through the decorative piece to be fixedly connected to the grille by mating the fifth snap with the fifth snap-fit hole.

The bumper is provided at its lower end with a protrusively extending insert, and the grille has a sixth insert-fit hole. The bumper is fastened to the grille by mating the insert with the sixth insert-fit hole.

Preferably, the assembly structure also comprises a headlight, wherein the bumper has a protruding rod, the decorative piece and the grille are respectively provided with screw holes, and the bumper, the decorative piece and the grille are fastened by a screw sequentially penetrating into the protruding rod and the screw holes.

The plated trim has a pin, and the grille has a pin hole mating with the pin.

The assembly structure according to the present invention has the following advantageous effects over the prior art: by providing a decorative piece having an M-shaped self-adaptive structure, the assembly structure guarantees good fitting properties between the grille, the plated trim, the decorative piece and the bumper and absorbs the tolerances, thereby making it possible to control the visible width of the decorative piece exposed between the plated trim and the bumper; all the above parts are connected by snaps, instead of screws used in the prior art, which greatly reduces the cost; additionally, the uniformity of the gap between the front bumper assembly and left and right headlights in Y direction can be ensured.

### Brief description of the figures

Fig. 1 is a structural schematic view of an assembly structure in the prior art;
Fig. 1A is a cross-sectional view taken along the line A-A in Fig. 1;
Fig. 1B is a cross-sectional view taken along the line B-B in Fig. 1;
Fig. 2 is a structural schematic view of an assembly structure according to a preferred embodiment of the present invention;
Fig. 2A is a cross-sectional view taken along the line C-C in Fig. 2;
Fig. 2B is a cross-sectional view taken along the line D-D in Fig. 2;
Fig. 2C is a cross-sectional view taken along the line E-E in Fig. 2;
Fig. 2D is a cross-sectional view taken along the line F-F in Fig. 2;
Fig. 3 is a structural schematic view of an assembly structure in the area of a headlight according to a preferred embodiment of the present invention; and
Fig. 3A is a cross-sectional view taken along the line G-G in Fig. 3.

### Description of embodiments

The preferred embodiments of the present invention will be described in detail with reference to the drawings, so as to better describe the functions and characteristics of the present invention.

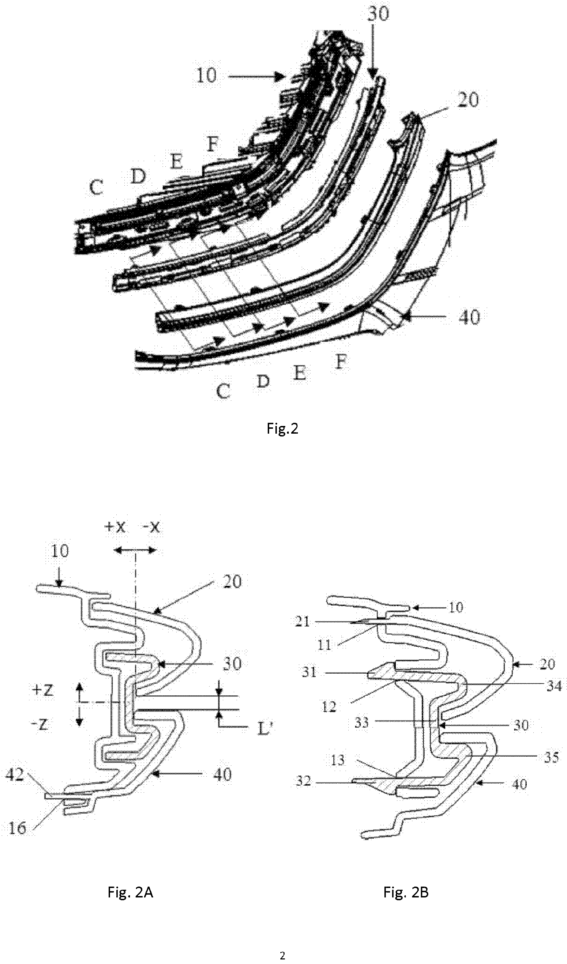

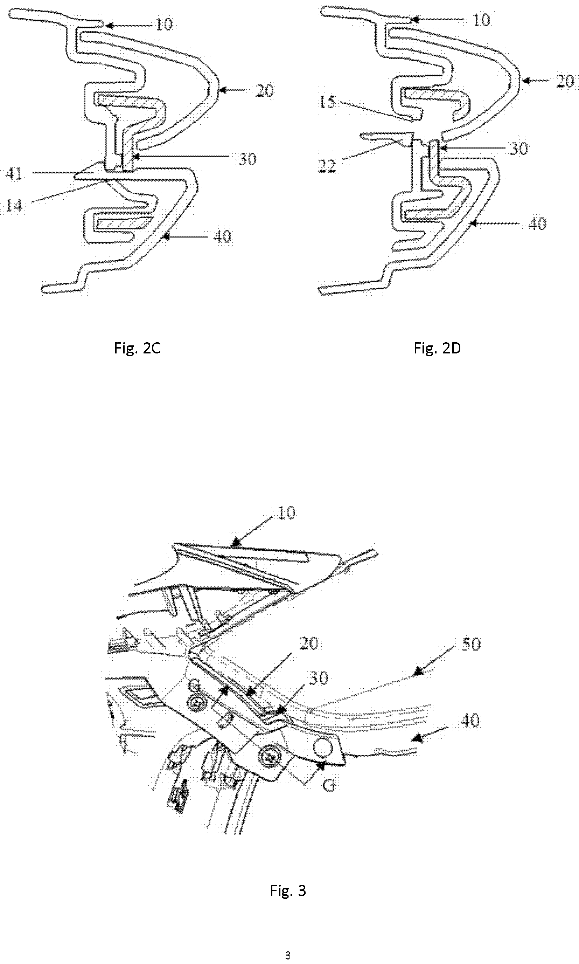

According to a first preferred embodiment of the present invention, there is provided an assembly structure, as shown in Fig. 2. The assembly structure mainly comprises a grille 10, a plated trim 20, a decorative piece 30 and a bumper 40.

The grille 10 has a first snap-fit hole 11, a second snap-fit hole 12, a third snap-fit hole 13 (see Fig. 2B), a fourth snap-fit hole 14 (see Fig. 2C) and a fifth snap-fit hole 15 (see Fig. 2D). The plated trim 20 has a first snap 21 (see Fig. 2B) and is fixedly connected to the grille 10 by mating the first snap 21 with the first snap-fit hole 11. The decorative piece 30 has an M-shaped self-adaptive structure (see Figs. 2A and 2B) and has a second snap 31 and a third snap 32. The decorative piece 30 is fixedly connected to the grille 10 by mating the second snap 31 with the second snap-fit hole 12 and mating the third snap 32 with the third snap-fit hole 13. The bumper 40 has a fourth snap 41 (see Fig. 2C) and passes through the decorative piece 30 to be fixedly connected to the grille 10 by mating the fourth snap 41 with the fourth snap-fit hole 14.

With reference to Fig. 2B, the M-shaped self-adaptive structure of the decorative piece 30 comprises a recess 33 and two protrusions 34, 35 separated by the recess 33. The second snap 31 and the third snap 32 are respectively located at the free ends of the protrusions 34, 35 of the decorative piece 30. The recess 33 of the decorative piece 30 has a plane structure and is partially exposed to the exterior between the plated trim 20 and the bumper 40.

According to a preferred embodiment of the present invention, the visible width L' of the exposed part of the recess 33 of the decorative piece 30 which is exposed between the plated trim 20 and the bumper 40 ranges from 4.0mm to 5.0mm, most preferably 4.5mm.

According to the preferred embodiment, with reference to Fig. 2D, the plated trim 20 also has a fifth snap 22. The plated trim 20 passes through the decorative piece 30 to be fixedly connected to the grille 10 by mating the fifth snap 22 with the fifth snap-fit hole 15.

In order to effectively control the matching between the bumper 40 and the plated trim 20 and to prevent the turnover of the bumper 40, the grille 10 is also provided with an insert-fit hole 16, and the bumper 40 is provided at its lower end with a protrusively extending insert 42 (see Fig. 2A). The bumper 40 is fastened to the grille 10 by mating the insert 42 with the insert-fit hole 16, thereby completely preventing the bumper 40 from turning over.

In the assembly structure of the decorative piece provided in the preferred embodiment of the present invention, the decorative piece 30 is designed to have an M-shaped self-adaptive structure. The elasticity of the M-shaped self-adaptive structure *per* se controls the effective connection between the plated trim 20 and the decorative piece 30, as well as between the bumper 40 and the decorative piece 30. The characteristics of the M shape *per se* help to absorb the assembly error and manufacturing error between the plated trim 20, the bumper 40 and the grille 10 so as to effectively control the matching between them.

The plated trim 20 is matched with the grille 10 in the +Z direction, with the bumper 40 in the -Z direction, and with the decorative piece 30 in the +X direction, whereas the bumper 40 is matched with the plated trim 20 in the +Z direction and with the decorative piece 30 in the +X direction.

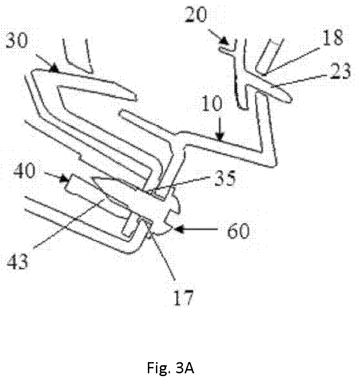

Thus, according to a second preferred embodiment of the present invention, there is also provided an assembly structure in the area of a headlight, as shown in Fig. 3.

In this embodiment, the grille 10, the plated trim 20, the decorative piece 30 and the bumper 40 have the same assembly structure as that of the first embodiment. Besides, the bumper 40 further comprises a protrusive rod 43, whereas the decorative piece 30 and the grille 10 are respectively provided with screw holes 35, 17. The screw 60 sequentially penetrates into the protrusive rod 43 and the screw holes 35, 17 to fasten the bumper 40, the decorative piece 30 and the grille 10.

The plated trim 20 further comprises a pin 23, and the grille 10 comprises a pin hole 18 mating with the pin. The pin-hole mating can further control the matching between the grille 10, the plated trim 20, the decorative piece 30, the bumper 40 and the headlight 50.

The assembly structure in the area of headlights ensures the uniformity of the gap between the front bumper assembly and left and right headlights in the Y direction.

The above contents are merely preferred embodiments of the present invention and not intended to limit the scope of the present invention. Variations can be made to the above embodiments of the present invention. Any simple and equivalent variation and modification made according to the claims and description of the present invention fall within the protection scope of the claims of the present invention. Conventional techniques are not described in detail in the present invention.

## Claims

1. An assembly structure comprising:
- a grille (10);
- a plated trim (20) fixedly connected to the grille (10);
- a decorative piece (30) fixedly connected to the grille (10); and
- a bumper (40) fixedly connected to the grille (10) **characterised in that** the bumper (40) is connected to the grille (10) by passing through the decorative piece (30),
wherein the decorative piece (30) is partially exposed to the exterior between the plated trim (20) and the bumper (40), and **in that**
the decorative piece (30) has an M-shaped self-adaptive structure comprising a recess (33) and two protrusions (34, 35) separated by the recess (33).

2. The assembly structure according to claim 1, wherein the recess (33) of the decorative piece has a plane structure.

3. The assembly structure according to claim 1 or 2, wherein the recess (33) of the decorative piece (30) is partially exposed to the exterior between the plated trim (20) and the bumper (40).

4. The assembly structure according to claim 3, wherein the visible width of the exposed part of the recess of the decorative piece which is exposed between the plated trim (20) and the bumper (40) ranges from 4.0mm to 5.0mm.

5. The assembly structure according to anyone one of the preceding claims, wherein the grille (10) having a first (11), a second (12), a third (13) and a fourth (14) snap-fit hole; the plated trim (20) having a first snap (21) and being fixedly connected to the grille (10) by mating the first snap (21) with the first snap-fit hole (11); the decorative piece (30) having a second snap (31) and a third snap (32) and being fixedly connected to the grille (10) by mating the second snap (31) with the second snap-fit hole (12) and mating the third snap (32) with the third snap-fit hole (13); the bumper (40) having a fourth snap (41) which passes through the decorative piece (30) to be fixedly connected to the grille (10) by mating the fourth snap (41) with the fourth snap-fit hole (14).

6. The assembly structure according to claim 5, wherein the second snap (31) and the third snap (32) are respectively located at the free ends of the protrusions (34, 35) of the decorative piece (30).

7. The assembly structure according to anyone one of claims 5 and 6, wherein the plated trim (20) also has a fifth snap (22), the grille (10) has a fifth snap-fit hole (15), and the plated trim (20) passes through the decorative piece (30) to be fixedly connected to the grille (10) by mating the fifth snap (22) with the fifth snap-fit hole (15).

8. The assembly structure according to anyone one of claims 5 to 7, wherein the bumper (40) is provided at its lower end with a protrusively extending insert (42), the grille (10) has a sixth insert-fit hole (16), and the bumper (40) is fastened to the grille (10) by mating the insert (42) with the sixth insert-fit hole (16).

9. The assembly structure according to anyone one of the preceding claims, wherein the assembly structure also comprises a headlight (50);
wherein the bumper has a protruding rod (43), the decorative piece (30) and the grille (10) are respectively provided with screw holes (35, 17), the bumper (40), the decorative piece (30) and the grille (10) are fastened by a screw (60) sequentially penetrating into the protruding rod (43) and the screw holes (35, 17).

10. The assembly structure according to claim 9, wherein the plated trim (20) comprises a pin (23), and the grille (10) comprises a pin hole (18) mating with the pin (23).

## Patentansprüche

1. Baugruppenstruktur, aufweisend:
ein Gitter (10);
eine plattierte Verkleidung (20), die fest mit dem Gitter (10) verbunden ist;
ein Dekorationsstück (30), das fest mit dem Gitter (10) verbunden ist; und
einen Stoßfänger (40), der fest mit dem Gitter (10) verbunden ist,
**dadurch gekennzeichnet, dass** der Stoßfänger (40) mit dem Gitter (10) verbunden ist, indem er durch das Dekorationsstück (30) hindurchgeht,
wobei das Dekorationsstück (30) teilweise nach außen zwischen der plattierten Verkleidung (20) und dem Stoßfänger (40) freiliegt, und dass das Dekorationsstück (30) eine M-förmige selbstanpassende Struktur aufweist, die eine Vertiefung (33) und zwei Vorsprünge (34, 35) umfasst, die durch die Vertiefung (33) getrennt sind.

2. Baugruppenstruktur nach Anspruch 1,
wobei die Vertiefung (33) des Dekorationsstücks eine ebene Struktur aufweist.

3. Baugruppenstruktur nach Anspruch 1 oder 2,
wobei die Vertiefung (33) des Dekorationsstücks (30) zwischen der plattierten Verkleidung (20) und dem Stoßfänger (40) teilweise nach außen hin freiliegt.

4. Baugruppenstruktur nach Anspruch 3,
wobei die sichtbare Breite des freiliegenden Teils der Vertiefung des Dekorationsstücks, die zwischen der plattierten Verkleidung (20) und dem Stoßfänger (40) freiliegt, im Bereich von 4,0 mm bis 5,0 mm liegt.

5. Baugruppenstruktur nach einem der vorhergehenden Ansprüche,
wobei das Gitter (10) ein erstes (11), ein zweites (12), ein drittes (13) und ein viertes (14) Schnapploch aufweist;
wobei die plattierte Verkleidung (20) einen ersten Schnapper (21) aufweist und fest
mit dem Gitter (10) verbunden ist, indem der erste Schnapper (21) mit dem ersten Schnapploch (11) zusammenpasst;
wobei das Dekorationsstück (30) einen zweiten Schnapper (31) und einen dritten Schnapper (32) aufweist und fest mit dem Gitter (10) verbunden ist, indem der zweite Schnapper (31) mit dem zweiten Schnapploch (12) und der dritte Schnapper (32) mit dem dritten Schnapploch (13) zusammenpasst,
wobei der Stoßfänger (40) einen vierten Schnapper (41) aufweist, der durch das Dekorationsstück (30) hindurchgeht, um fest mit dem Gitter (10) verbunden zu werden, indem der vierte Schnapper (41) mit dem vierten Schnapploch (14) in Eingriff gebracht wird.

6. Baugruppenstruktur nach Anspruch 5,
wobei der zweite Schnapper (31) und der dritte Schnapper (32) jeweils an den freien Enden der Vorsprünge (34, 35) des Dekorationsstück (30) angeordnet sind.

7. Baugruppenstruktur nach einem der Ansprüche 5 und 6,
wobei die plattierte Verkleidung (20) auch einen fünften Schnapper (22) aufweist, das Gitter (10) ein fünftes Schnapploch (15) aufweist und die plattierte Verkleidung (20) durch das Dekorationsstück (30) hindurchgeht, um durch Zusammenpassen des fünften Schnappers (22) mit dem fünften Schnapploch (15) fest mit dem Gitter (10) verbunden zu werden.

8. Baugruppenstruktur nach einem der Ansprüche 5 bis 7,
wobei der Stoßfänger (40) an seinem unteren Ende mit einem vorstehenden Einsatz (42) versehen ist, das Gitter (10) ein sechstes Schnapploch (16) aufweist und der Stoßfänger (40) am Gitter (10) befestigt ist, indem der Einsatz (42) mit dem sechsten Schnapploch (16) zusammenpasst.

9. Baugruppenstruktur nach einem der vorhergehenden Ansprüche,
wobei die Baugruppenstruktur auch einen Scheinwerfer (50) umfasst,
wobei der Stoßfänger eine vorstehende Stange (43) aufweist,
das Dekorationsstück (30) und das Gitter (10) jeweils mit Schraubenlöchern (35, 17) versehen sind, der Stoßfänger (40), das Dekorationsstück (30) und das Gitter (10) durch eine Schraube (60) befestigt sind, die nacheinander in die vorstehende Stange (43) und die Schraubenlöcher (35, 17) eindringt.

10. Baugruppenstruktur nach Anspruch 9,
wobei die plattierte Verkleidung (20) einen Stift (23) aufweist und das Gitter (10) ein
Stiftloch (18) umfasst, das zu dem Stift (23) passt.

## Revendications

1. Une structure d'assemblage comprenant :
- une grille (10) ;
- une garniture plaquée (20) reliée à la grille (10) ;
- une pièce décorative (30) reliée de manière fixe à la grille (10) ; et
- un pare-chocs (40) relié de manière fixe à la grille (10) **caractérisé en ce que** le pare-chocs (40) est relié à la grille (10) en passant à travers la pièce décorative (30), la pièce décorative (30) étant partiellement exposée sur l'extérieur entre la garniture plaquée (20) et le pare-chocs (40), et **en ce que** la pièce décorative (30) a une structure auto-adaptative en forme de M comprenant un évidement (33) et deux saillies (34, 35) séparées par l'évidement (33).

2. La structure d'assemblage selon la revendication 1, dans laquelle l'évidement (33) de la pièce décorative a une structure plane.

3. La structure d'assemblage selon la revendication 1 ou la revendication 2, dans laquelle l'évidement (33) de la pièce décorative (30) est partiellement exposé sur l'extérieur entre la garniture plaquée (20) et le pare-chocs (40).

4. La structure d'assemblage selon la revendication 3, dans laquelle la largeur visible de la partie exposée de l'évidement de la pièce décorative qui est exposée entre la garniture plaquée (20) et le pare-chocs (40) va de 4,0 mm à 5,0 mm.

5. La structure d'assemblage selon l'une quelconque des revendications précédentes, dans laquelle la grille (10) présente un premier (11), un deuxième (12), un troisième (13) et un quatrième (14) trous d'encliquetage ; la garniture plaquée (20) ayant un premier organe d'encliquetage (21) et étant reliée de manière fixe à la grille (10) en accouplant le premier organe d'encliquetage (21) avec le premier trou d'encliquetage (11) ; la pièce décorative (30) ayant un deuxième organe d'encliquetage (31) et un troisième organe d'encliquetage (32) et étant reliée de manière fixe la grille (10) en accouplant le deuxième organe d'encliquetage (31) avec le deuxième trou d'encliquetage (12) et en accouplant le troisième encliquetage (32) avec le troisième trou d'encliquetage (13) ; le pare-chocs (40) ayant un quatrième organe d'encliquetage (41) qui traverse la pièce décorative (30) de façon à être relié de manière fixe à la grille (10) en accouplant le quatrième organe d'encliquetage (41) avec le quatrième trou d'encliquetage (14).

6. La structure d'assemblage selon la revendication 5, dans laquelle le deuxième organe d'encliquetage (31) et le troisième organe d'encliquetage (32) sont respectivement situés aux extrémités libres des saillies (34, 35) de la pièce décorative (30).

7. La structure d'assemblage selon l'une quelconque des revendications 5 et 6, dans laquelle la garniture plaquée (20) a également un cinquième organe encliquetage (22), la grille (10) a un cinquième trou d'encliquetage (15), et la garniture plaquée (20) traverse la pièce décorative (30) de façon à être reliée de manière fixe à la grille (10) en accouplant le cinquième encliquetage (22) avec le cinquième trou d'encliquetage (15).

8. La structure d'assemblage selon l'une quelconque des revendications 5 à 7, dans laquelle le pare-chocs (40) est pourvu à son extrémité inférieure d'un insert (42) s'étendant de manière saillante, la grille (10) a un sixième trou d'insertion ajustée (16), et le pare-chocs (40) est fixé à la grille (10) en accouplant l'insert (42) avec le sixième trou d'insertion ajustée (16).

9. La structure d'assemblage selon l'une quelconque des revendications précédentes, dans laquelle la structure d'assemblage comprend également un phare (50) ;
le pare-chocs a une tige en saillie (43), la pièce décorative (30) et la grille (10) sont respectivement pourvues de trous à vis (35, 17), le pare-chocs (40), la pièce décorative (30) et la grille (10) sont fixés par une vis (60) pénétrant séquentiellement dans la tige en saillie (43) et les trous à vis (35, 17).

10. La structure d'assemblage selon la revendication 9, dans laquelle la garniture plaquée (20) comprend une broche (23), et la grille (10) comprend un trou (18) à broche venant en accouplement avec la broche (23).
